(19) Europäisches Patentamt / European Patent Office / Office européen des brevets

(11) **EP 3 640 076 B1**

(12) **EUROPEAN PATENT SPECIFICATION**

(45) Date of publication and mention
of the grant of the patent:
**24.03.2021 Bulletin 2021/12**

(21) Application number: **18201237.7**

(22) Date of filing: **18.10.2018**

(51) Int Cl.:
**B60L 3/00** *(2019.01)*   **B60L 3/12** *(2006.01)*

(54) **APPARATUS AND METHOD FOR DISCHARGING A Y-CAPACITOR**

BATTERIESYSTEM UND ELEKTROFAHRZEUG

SYSTÈME DE BATTERIE ET VÉHICULE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.04.2020 Bulletin 2020/17**

(73) Proprietor: **Samsung SDI Co., Ltd.
Gyeonggi-do 17084 (KR)**

(72) Inventors:
• **Haindl, Michael
8230 Hartberg (AT)**
• **Fritz, Jürgen
8020 Graz (AT)**

(74) Representative: **Gulde & Partner
Patent- und Rechtsanwaltskanzlei mbB
Wallstraße 58/59
10179 Berlin (DE)**

(56) References cited:
**US-A1- 2008 224 687     US-A1- 2013 314 097**

• **"ISO 6469-4:2015 Electrically propelled road
vehicles -- Safety specifications -- Part 4: Post
crash electrical safety", ISO STANDARD, ISO,
CH , 1 September 2015 (2015-09-01), pages 1-15,
XP009509810, Retrieved from the Internet:
URL:https://www.iso.org/standard/60584.htm l
[retrieved on 2018-12-03]**
• **"ISO 6469-3:2018 Electrically propelled road
vehicles -- Safety specifications -- Part 3:
Electrical safety", ISO STANDARD, ISO, CH , vol.
Edition 3 1 October 2018 (2018-10-01), page 20pp,
XP009509808, Retrieved from the Internet:
URL:https://www.iso.org/standard/68667.htm l
[retrieved on 2018-12-03]**

## Description

## Field of the Invention

The present invention relates to a battery system and an electric vehicle.

## Technological Background

In the recent years, vehicles for transportation of goods and people have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of an electric motor and a conventional combustion engine.

In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Typical and maximum values for the charge / voltage of a Y capacitor (which is often also denoted as a "Y-Cap") required for a complete High-Voltage, HV, board net are usually evaluated during the development phase. Based on the evaluation / values required, it is decided if an active discharge of the Y-capacitor is required or not. The Y-capacitor is usually monitored during operation of the battery system but has to be discharged if the battery system is shut down in an abnormal operation condition. In case e.g. of a crash, at vehicle side, a Y-capacitor with an energy content greater than a predetermined threshold, e.g., 0.2J, needs to be discharged in a certain predetermined time. This is normally performed by an additional independent component connected to the HV board net of the vehicle, except for the HV battery. For instance, an insulation resistance may be additionally arranged between the HV poles and the chassis for discharging a Y-capacitor in case of a crash, which represents a so called passive discharge solution. As a so called active discharge solution, a resistor and a switch connected in series may come to use. Normally, the size of the insulation resistance should be large enough, wherein a couple of hundred kOhm, e.g. 100 kOhm, 200 kOhm, 300 kOhm, 400 kOhm, 500 kOhm or 600 kOhm would typically bring the total isolation resistance below <500Ohm/V. However, the size of the insulation resistance further depends on the operation voltage. Exemplarily, the size of the insulation resistance should ensure at least $500\Omega/V$ of the operation voltage of the battery system.

An implementation of the aforementioned discharge causes additional efforts and costs on vehicle side (HV component) Related technology is known from US 2013/314097 A1.

## Summary of Inventior

The invention is set forth in the independent claims. Preferred embodiments are defined by the dependent claims.

It is thus an object of the present invention to overcome or reduce at least some of the drawbacks of the prior art and to provide a solution for actively discharging a Y-capacitor in a battery system via the insulation resistance measurement circuit of the battery system. According to one embodiment of the present disclosure, there is provided a battery module capable of being coupled with a vehicle module as defined in claim 1. The battery module comprises a power source and an isolation monitoring circuit coupled with the power source. The isolation monitoring circuit is configured to be able to discharge a Y-capacitor module when the battery module is coupled with the vehicle module.

At least some disadvantages in the background art are eliminated by this invention. In particular, according to some embodiments of the present invention, no additional HV efforts to discharge Y-capacitor, and discharge of vehicle Y-capacitor can be performed on battery side. In particular, discharging the Y-capacitor of the HV-System can be implemented by using the isolation monitoring circuit of a battery system. Already present components of the battery system can be used for discharging Y-capacitor between a HV pole of the battery system and a chassis of the system/vehicle. For discharging Y-capacitor, at least one HV pole is connected to a chassis via part of the isolation monitoring circuit integrated in the battery system. The isolation monitoring circuit comprises a discharge path between each HV pole and the chassis, each comprising a discharge switch and a resistor. In abnormal operation condition, if HV poles are separated from cell stack via disconnect relays, at least one disconnect relay and the corresponding discharge switch are set conductive and the Y-capacitor is discharged via the resistor.

The invention uses already available actuators and components of a HV battery system and enables the battery to actively discharge Y capacitors of the HV board net. Costs for this functionality can be saved on other components. Additionally, this functionality can be sold as "unique selling point" USP of the HV battery.

According to another embodiment of the present disclosure, there is provided a system as defined in claim 8. The system comprises a battery module capable of being coupled with a vehicle module as mentioned above. The vehicle module comprises a Y-capacitor module comprising one or more Y-capacitors.

According to another embodiment of the present disclosure, there is provided a method as defined in claim 13. The method comprises the steps of:

- receiving a crash signal if an abnormal situation occurs in a system as defined above;
- determining whether an energy content of a Y-capacitor in the vehicle module is greater than a predetermined threshold in response to the crash signal;
- using the isolation monitoring circuit in the battery module as a discharge device to discharge the Y-capacitor if the energy content of the Y-capacitor is greater than the predetermined threshold.

Further aspects of the present invention could be learned from the dependent claims or the following description.

## Brief Description of the Drawings

Features will become apparent to those of ordinary skill in the art by describing in detail exemplary embodiments with reference to the attached drawings in which:

Fig. 1 shows a block diagram of a system comprising a battery module and a vehicle module according to an embodiment of the present invention;
Fig. 2 shows a circuit for implementing the block diagram of the system comprising a battery module and a vehicle module according to Fig. 1;
Fig. 3 is a circuit for the battery module according to an embodiment of the present invention;
Fig. 4 is a flow chart for the method 500 according to an embodiment of the present invention.

## Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value. Further, the use of "may" when describing embodiments of the present invention refers to "one or more embodiments of the present invention." Herein, the terms "upper" and "lower" are defined according to the z-axis. For example, the cover is positioned at the upper part of the z-axis, whereas the ground plate is positioned at the lower part thereof.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

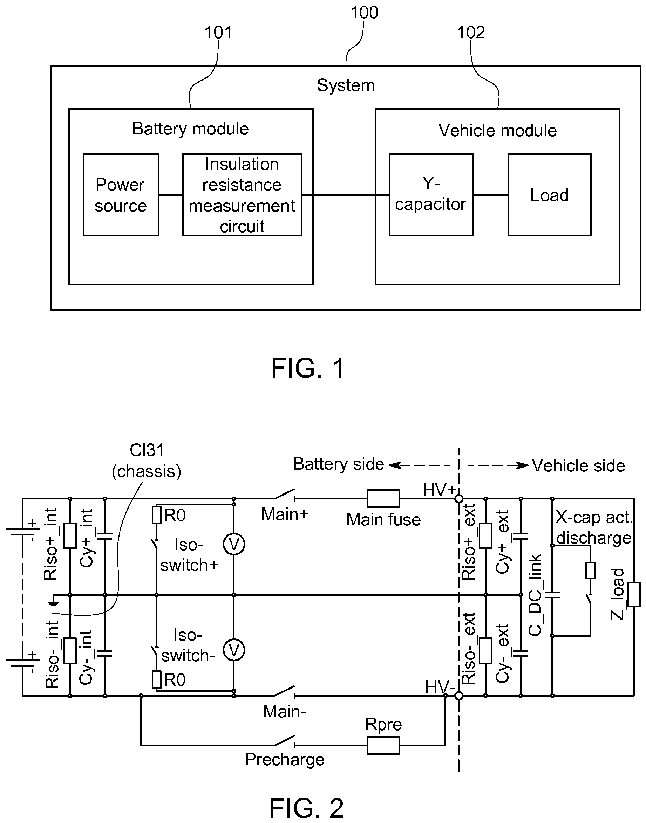

Fig. 1 shows a block diagram of a system comprising a battery module and a vehicle module according to an embodiment of the present invention.

Referring to Fig. 1, a system 100 may comprise a battery module 101 and a vehicle module 102 that may be coupled with the battery module 101. The battery module 101 may comprise, among others, a power source and an isolation monitoring circuit coupled with the power source. The vehicle module 102 may comprise, among others, a Y-capacitor module comprising one or more Y-capacitors, and optionally a load that may be coupled with the Y-capacitor module. The Y-capacitor module and the load may be connected in parallel between HV poles HV+ and HV- of the vehicle module 102. Exemplarily, each Y-capacitor may be a parasitic and/or discrete capacitor between HV-life parts and chassis/LV-Ground.

Further, the HV poles HV+ and HV- may be connected to the load on the vehicle side.

The isolation monitoring circuit of the battery module 101 may be coupled with the Y-capacitor module so that discharge of the Y-capacitor module can be performed on battery side by using the isolation monitoring circuit of the battery module 101. Exemplarily, for each of the one or more Y-capacitors of the Y-capacitor module, a corresponding circuit unit can be arranged in the isolation monitoring circuit, which may comprises at least a switch and a resistor connected in series with each other. Exemplarily, the circuit unit corresponding to a Y-capacitor may further include a main contactor/relay connected in series with the switch and the resistor that may galvanically separate the cells from corresponding HV pole.

Fig. 2 shows a circuit for implementing the block diagram of the system comprising a battery module and a vehicle module according to Fig. 1.

Referring to Fig. 2, in the vehicle module 102, two Y-capacitors are arranged between the HV poles HV+ and HV- of the vehicle module 102. A first Y-capacitor of the two Y-capacitors is arranged between a first HV pole HV+ and the chassis/LV-Ground, and a second Y-capacitor of the two Y-capacitors is arranged between a second HV pole HV- and the chassis/LV-Ground. The vehicle module 102 may further include two resistors connected in parallel with the first and second Y-capacitors respectively. The vehicle module 102 may further include an X-capacitor and a load connected between the HV poles HV+ and HV-. A discharge circuit unit for discharging the X-capacitor may be connected in parallel with the X-capacitor, which may comprise a switch and a resistor connected in series with each other. The chassis is either of the vehicle module 102 or the battery module 101, or both of the vehicle module 102 and the battery module

101 and are connected. Exemplarily, when in abnormal situations, a Y-capacitor and/or an X-capacitor has an energy content exceeding a predefined threshold, e.g., 0.2J, a discharging operation is needed.

In the battery module 101, two circuit units corresponding to the two Y-capacitors may be arranged in the isolation monitoring circuit. A first circuit unit of the two circuit units may comprise a first resistor and a first switch connected between the positive terminal of the power source and the chassis. The first circuit unit may further comprise a first main relay Main+ connected in series with the first resistor and the first switch. The first circuit unit may be connected in parallel with the first Y-capacitor so as to discharge the first Y-capacitor. A second circuit unit of the two circuit units may comprise a second resistor and a second switch connected between the negative terminal of the power source and the chassis. The second circuit unit may further comprise a second main relay Main- connected in series with the second resistor and the second switch. The second circuit unit may be connected in parallel with the second Y-capacitor so as to discharge the second Y-capacitor. The main relays Main+ and Main- may be configured to be opened in abnormal situations, e.g. in response to a crash signal. Exemplarily, a main fuse may be arranged between the first HV pole HV+ and the first main relay Main+.

The value of the resistor R0 may be designed to measure the isolation value with an appropriate accuracy and to keep the current between HV-life parts and GND/chassis below a predetermined value, e.g. 2mA. The value of the resistor R0 may be high enough to discharge the Y-capacitor within a required time. The value of R0 may be in the same magnitude as the insulation resistance normally used between the HV poles and the chassis for discharging the Y-capacitor, e.g., several hundred kΩ. The value of R0 further depends on the operation voltage. Preferably, the value of $R_0$ should ensure at least 500Ω/V of the operation voltage of the battery system.

A calculation example of R0 is shown below:

System Voltage: $U_{sys} := 450V$

resistor R0: $R_{.0} := \frac{U_{sys}}{1mA} = 450k\Omega$

implemented resistor R0: $R_0 := 500k\Omega$

Energy in Y-Cap: $E_{y\_cap} := 0.2J$

Rough value for Y-Cap based on Energy:

$C_{.y} := \frac{2 \cdot E_{ycap}}{U_{sys}^2} = 1.975 \cdot \mu F$

Selected value for rough calculation: $C_y := 4\mu F$

max. time for discharge voltage across Y-caps to

below 60V: $t_{max} := 5s$ voltage after 5sec. based on values from above:

$$U(t) := U_{sys} \cdot e^{\left(\frac{-t}{R_0 \cdot C_y}\right)}$$

$U(t_{max})$= 36.938$V \rightarrow$ lower than 60V, as required.

In the battery module 101, a power source may be connected between the first main relay Main+ and the second main relay Main-, for powering the vehicle module 102 though the first main relay Main+ and the second main relay Main-. When the battery module 101 is coupled with the vehicle module 102 and both of the first main relay Main+ and the second main relay Main- are conductive (or closed), the positive terminal of the power source is connected with HV+ and the negative terminal of the power source is connected with HV-, and the vehicle module 102 is powered on. When the battery module 101 is not coupled with the vehicle module 102 or either of the first main relay Main+ and the second main relay Main- is opened, the vehicle module 102 is powered off. Further, two capacitors connected in series and two resistors connected in series can be connected in parallel between the positive terminal of the power source and the negative terminal of the power source, with the first one of the two capacitors and the first one of the two resistors being connected in parallel between the positive terminal of the power source and the chassis, and the second one of the two capacitors and the second one of the two resistors being connected in parallel between the negative terminal of the power source and the chassis.

Referring to Fig. 2, the main relays Main+ and Main- may galvanically separate the cells from the HV poles HV+, HV-. A precharge circuit unit may be arranged to be connected in parallel with the second main relay Main-.

If the active discharge is requested by the vehicle (e.g. via a crash signal), the X-capacitor may be discharged by other components. Regarding the discharge of the Y-capacitors, the battery module 101 may keep one of the relays Main+ and Main- closed (or closes the same if not already closed) and closes an isolation switch Iso-switch+ or Iso-switch- that is connected to the closed relay.

Thus, the external Y-capacitors are discharged by the corresponding main relay Main+ or Main-, the corresponding resistor R0 and the corresponding isolation switch Iso-switch+ or Iso-switch-. The isolation switch connected to the corresponding relay that is open, may also be kept open. Hence, the invention allows to discharge both Y-capacitors by closing a chosen isolation switch and the corresponding main relay.

The external active discharge network as shown in Fig. 2 may be used to discharge the X-capacitor.

Hence, expressed in other words, in a case in which the Y capacitors need to be discharge due to e.g.

a crash, the battery keeps one of the relays closed (or closes them if not already closed) and closes the isolation switch that is connected to the closed relay.

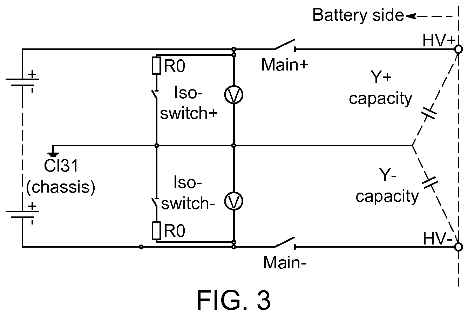

Fig. 3 is a circuit for the battery module according to an embodiment of the present invention.

Referring to Fig. 3, in the battery module 101, an isolation monitoring circuit and a power source may be arranged. Two circuit units corresponding to the two Y-capacitors may be arranged in the isolation monitoring circuit. A first circuit unit of two circuit units may comprise a first resistor and a first switch connected between the positive terminal of the power source and the chassis. The first circuit unit may further comprise a first main relay Main+ connected in series with the first resistor and the first switch. The first circuit unit may be connected in parallel with the first Y-capacitor so as to discharge the first Y-capacitor. A second circuit unit of two circuit units may comprise a second resistor and a second switch connected between the negative terminal of the power source and the chassis. The second circuit unit may further comprise a second main relay Main- connected in series with the second resistor and the second switch. The second circuit unit may be connected in parallel with the second Y-capacitor so as to discharge the second Y-capacitor. The main relays Main+ and Main- may be configured to be opened in abnormal situations, e.g. in response to a crash signal.

The isolation monitoring circuit may be connected between the HV poles HV+ and HV- when the battery module 101 is coupled with the vehicle module 102. The first circuit unit may be connected in parallel with the first Y-capacitor so as to discharge the first Y-capacitor. The second circuit unit may be connected in parallel with the second Y-capacitor so as to discharge the second Y-capacitor.

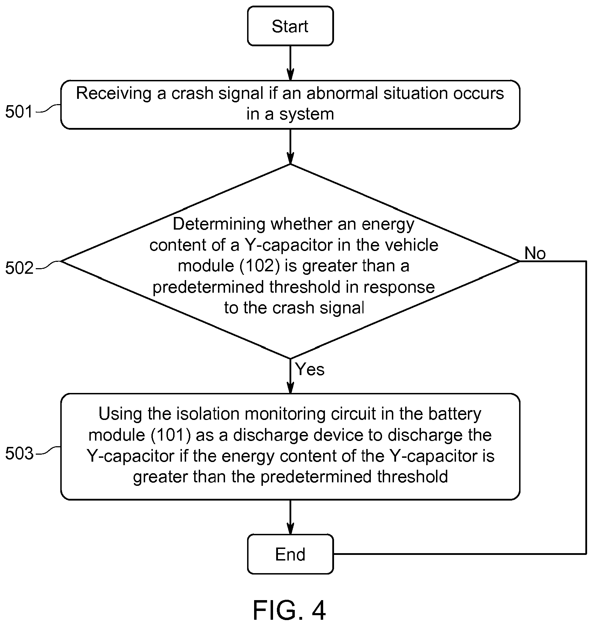

Fig. 4 is a flow chart for the method 500 according to an embodiment of the present invention.

The main relays Main+ and Main- may be configured to be opened in abnormal situations, e.g. in response to a crash signal. As a first step of the discharge process, a state of the main relays may be determined. Exemplarily, if one of the main relays is still conductive (e.g. due to a relay fault), the corresponding iso switch is set conductive (or closed) for the discharge of the Y-capacity. If both of the main relays are opened, both the main relay and the corresponding iso switch are set conductive (or closed) for the discharge of the Y-capacity.

The method 500 may comprise the following steps.

Step 501, receiving a crash signal if an abnormal situation occurs in a system comprising a battery module 101 and a vehicle module 102. The system can be the one as shown in any of Figs. 1 and 2, and the battery module 101 can be the one as shown in any of Figs. 1 to 3.

Optionally, in step 502, it is determined whether an energy content of a Y-capacitor in the vehicle module 102 is greater than a predetermined threshold in response to the crash signal. If the energy content of a Y-capacitor is greater than the predetermined threshold, the method proceeds to step 503, or if not, the method ends. Exemplarily, the threshold may be 0.2J.. Alternatively, if it is set by default that active discharge is triggered, then the method proceeds to step 503 directly after step 501.

Step 503, using the isolation monitoring circuit in the battery module 101 as a discharge device to discharge the Y-capacitor, by e.g., controlling a relay between the battery module 101 and the vehicle module 102 to connect the isolation monitoring circuit with the Y-capacitor. When the Y-capacitor is to be discharged, both the corresponding switch and the corresponding main relay are closed, and when the Y-capacitor is not to be discharged, at least one of the corresponding switch and the corresponding main relay is opened.

## Claims

1. A battery module (101) capable of being coupled with a vehicle module (102), the battery module (101) comprising:

   a power source; and
   an isolation monitoring circuit coupled with the power source,
   **characterized in that**
   the isolation monitoring circuit is configured to be able to discharge a Y-capacitor module of the vehicle module (102) when the battery module (101) is coupled with the vehicle module (102).

2. The battery module (101) according to claim 1, wherein the isolation monitoring circuit is configured to be connected in parallel with the Y-capacitor module when the battery module (101) is coupled with the vehicle module (102).

3. The battery module (101) according to claim 1 or 2, wherein the isolation monitoring circuit comprises one or more circuit units each of which corresponds to a Y-capacitor of the Y-capacitor module comprising one or more Y-capacitors.

4. The battery module (101) according to claim 3, wherein each of the one or more circuit units comprises a switch and a resistor connected in series with each other, wherein the resistor is high enough to discharge the Y-capacitor within a required time.

5. The battery module (101) according to claim 4, wherein each of the one or more circuit units further comprises a main relay connected in series with the switch and the resistor that is configured to separate the power source from the vehicle module (102).

6. The battery module (101) according to any of claims 3 to 5, wherein if the Y-capacitor module comprises two Y-capacitors, two circuit units corresponding to the two Y-capacitors are arranged in the isolation monitoring circuit, wherein a first circuit unit of the two circuit units comprises a first resistor and a first switch connected between the positive terminal of the power source and a chassis, and a second circuit of the two circuit units comprises a second resistor and a second switch connected between the negative terminal of the power source and the chassis, wherein the first circuit unit and the second circuit unit are configured to connected in parallel with a first Y-capacitor and a second Y-capacitor of the Y-capacitor module respectively so as to discharge the first Y-capacitor and the second Y-capacitor respectively.

7. The battery module (101) according to claim 6, wherein the first circuit unit further comprises a first main relay (Main+) connected in series with the first resistor and the first switch, and the second circuit unit further comprises a second main relay (Main-) connected in series with the second resistor and the second switch, wherein the power source is connected between the first main relay (Main+) and the second main relay (Main-).

8. A system (100) comprising a battery module (101) capable of being coupled with a vehicle module (102) according to any of claims 1 to 7, wherein the vehicle module (102) comprises a Y-capacitor module comprising one or more Y-capacitors.

9. The system (100) according to claim 8, wherein the vehicle module (102) further comprises a load, and the Y-capacitor module and the load are connected in parallel between HV poles HV+ and HV- of the vehicle module (102).

10. The system (100) according to claim 8 or 9, wherein the Y-capacitor module comprises two Y-capacitors which are arranged between the HV poles (HV+ and HV-) of the vehicle module (102), wherein a first Y-capacitor of the two Y-capacitors is arranged between a first HV pole (HV+) and a chassis, and a second Y-capacitor of the two Y-capacitors is arranged between a second HV pole (HV-) and the chassis.

11. The system (100) according to claim 10, wherein the vehicle module (102) further comprises an X-capacitor and a load connected between the HV poles (HV+ and HV-), and a discharge circuit unit for discharging the X-capacitor is connected in parallel with the X-capacitor, which comprise a switch and a resistor connected in series with each other.

7

**12.** The system (100) according to claim 10 or 11, wherein the chassis is either of the vehicle module (102) or the battery module (101), or both of the vehicle module (102) and the battery module (101) and are connected.

**13.** A method (500) for discharging a Y-capacitor of a Y-capacitor module of a vehicle module (102) in a system (100) according to any of claims to 12, comprising the steps of:

> receiving (501) a crash signal if an abnormal situation occurs in the system (100);
> determining (502) whether an energy content of the Y-capacitor in the vehicle module (102) is greater than a predetermined threshold in response to the crash signal; and
> discharging the Y-capacitor if the energy content of the Y-capacitor is greater than the predetermined threshold,
> **characterized in that**
> the discharging step comprises using (503) the isolation monitoring circuit in the battery module (101) as a discharge device to discharge the Y-capacitor.

**14.** The method (500) according to claim 13, wherein the threshold is 0.2J, and the using step (503) further comprises controlling a relay between the battery module (101) and the vehicle module (102) to connect the isolation monitoring circuit with the Y-capacitor, wherein when the Y-capacitor is to be discharged, both the corresponding switch and the corresponding main relay are closed, and when the Y-capacitor is not to be discharged, at least one of the corresponding switch and the corresponding main relay is opened.

**Patentansprüche**

**1.** Batteriemodul (101), das mit einem Fahrzeugmodul (102) gekoppelt werden kann, das Batteriemodul (101) umfassend:

> eine Leistungsquelle; und
> eine Isolationsüberwachungsschaltung, die mit der Leistungsquelle gekoppelt ist,
> **dadurch gekennzeichnet, dass**
> die Isolationsüberwachungsschaltung so konfiguriert ist, dass sie in der Lage ist, ein Y-Kondensatormodul des Fahrzeugmoduls (102) zu entladen, wenn das Batteriemodul (101) mit dem Fahrzeugmodul (102) gekoppelt ist.

**2.** Batteriemodul (101) nach Anspruch 1, wobei die Isolationsüberwachungsschaltung so konfiguriert ist, dass sie parallel zu dem Y-Kondensatormodul geschaltet ist, wenn das Batteriemodul (101) mit dem Fahrzeugmodul (102) gekoppelt ist.

**3.** Batteriemodul (101) nach Anspruch 1 oder 2, wobei die Isolationsüberwachungsschaltung eine oder mehrere Schaltungseinheiten umfasst, die jeweils einem Y-Kondensator des Y-Kondensatormoduls mit einem oder mehreren Y-Kondensatoren entsprechen.

**4.** Batteriemodul (101) nach Anspruch 3, wobei jede der einen oder mehreren Schaltungseinheiten einen Schalter und einen Widerstand umfasst, die miteinander in Reihe geschaltet sind, wobei der Widerstand hoch genug ist, um den Y-Kondensator innerhalb einer erforderlichen Zeit zu entladen.

**5.** Batteriemodul (101) nach Anspruch 4, wobei jede der einen oder mehreren Schaltungseinheiten ferner ein mit dem Schalter und dem Widerstand in Reihe geschaltetes Hauptrelais umfasst, das so konfiguriert ist, dass es die Leistungsquelle von dem Fahrzeugmodul (102) trennt.

**6.** Batteriemodul (101) nach einem der Ansprüche 3 bis 5, wobei, wenn das Y-Kondensatormodul zwei Y-Kondensatoren umfasst, zwei den beiden Y-Kondensatoren entsprechende Schaltungseinheiten in der Isolationsüberwachungsschaltung angeordnet sind, wobei eine erste Schaltungseinheit der beiden Schaltungseinheiten einen ersten Widerstand und einen ersten Schalter umfasst, der zwischen dem Pluspol der Leistungsquelle und einem Fahrgestell geschaltet ist, und eine zweite Schaltungseinheit der zwei Schaltungseinheiten einen zweiten Widerstand und einen zweiten Schalter umfasst, der zwischen dem Minuspol der Leistungsquelle und dem Fahrgestell geschaltet ist, wobei die erste Schaltungseinheit und die zweite Schaltungseinheit so konfiguriert sind, dass sie mit einem ersten Y-Kondensator und einem zweiten Y-Kondensator des Y-Kondensatormoduls parallel geschaltet sind, um jeweils den ersten Y-Kondensator und den zweiten Y-Kondensator zu entladen.

**7.** Batteriemodul (101) nach Anspruch 6, wobei die erste Schaltungseinheit ferner ein erstes Hauptrelais (Main+) umfasst, das in Reihe mit dem ersten Widerstand und dem ersten Schalter geschaltet ist, und die zweite Schaltungseinheit ferner ein zweites Hauptrelais (Main-) umfasst, das in Reihe mit dem zweiten Widerstand und dem zweiten Schalter geschaltet ist, wobei die Leistungsquelle zwischen dem ersten Hauptrelais (Main+) und dem zweiten Hauptrelais (Main-) geschaltet ist.

**8.** System (100) umfassend ein Batteriemodul (101), das mit einem Fahrzeugmodul (102) nach einem der Ansprüche 1 bis 7 gekoppelt werden kann, wobei das Fahrzeugmodul (102) ein Y-Kondensatormodul mit einem oder mehreren Y-Kondensatoren umfasst.

9. System (100) nach Anspruch 8, wobei das Fahrzeugmodul (102) ferner eine Last umfasst und das Y-Kondensatormodul und die Last parallel zwischen die HV-Pole HV+ und HV- des Fahrzeugmoduls (102) geschaltet sind.

10. System (100) nach Anspruch 8 oder 9, wobei das Y-Kondensatormodul zwei Y-Kondensatoren umfasst, die zwischen den HV-Polen (HV+ und HV-) des Fahrzeugmoduls (102) angeordnet sind, wobei ein erster Y-Kondensator der beiden Y-Kondensatoren zwischen einem ersten HV-Pol (HV+) und einem Fahrgestell angeordnet ist, und ein zweiter Y-Kondensator der beiden Y-Kondensatoren zwischen einem zweiten HV-Pol (HV-) und dem Fahrgestell angeordnet ist.

11. System (100) nach Anspruch 10, wobei das Fahrzeugmodul (102) ferner einen X-Kondensator und eine Last umfasst, die zwischen den HV-Polen (HV+ und HV-) geschaltet sind, und eine Entladeschaltungseinheit zum Entladen des X-Kondensators parallel zum X-Kondensator geschaltet ist, die einen Schalter und einen in Reihe geschalteten Widerstand umfasst.

12. System (100) nach Anspruch 10 oder 11, wobei das Fahrgestell entweder das Fahrzeugmodul (102) oder das Batteriemodul (101) oder sowohl das Fahrzeugmodul (102) als auch das Batteriemodul (101) ist und verbunden ist.

13. Verfahren (500) zum Entladen eines Y-Kondensators eines Y-Kondensatormoduls eines Fahrzeugmoduls (102) in einem System (100) nach einem der Ansprüche 7 bis 12, umfassend die Schritte:

Empfangen (501) eines Crash-Signals, wenn eine Ausnahmesituation im System (100) auftritt; Bestimmen (502), ob ein Energieinhalt des Y-Kondensators in dem Fahrzeugmodul (102) größer als ein vorbestimmter Schwellenwert ist, als Reaktion auf das Crash-Signal; und Entladen des Y-Kondensators, wenn der Energieinhalt des Y-Kondensators größer als der vorgegebene Schwellenwert ist, **dadurch gekennzeichnet, dass** der Entladeschritt die Verwendung (503) der Isolationsüberwachungsschaltung in dem Batteriemodul (101) als Entladevorrichtung zum Entladen des Y-Kondensators umfasst.

14. Verfahren (500) nach Anspruch 13, wobei der Schwellenwert 0,2 J beträgt und der Verwendungsschritt (503) ferner das Steuern eines Relais zwischen dem Batteriemodul (101) und dem Fahrzeugmodul (102) umfasst, um die Isolationsüberwachungsschaltung mit dem Y-Kondensator zu verbinden, wobei, wenn der Y-Kondensator entladen werden soll, sowohl der entsprechende Schalter als auch das entsprechende Hauptrelais geschlossen werden, und wenn der Y-Kondensator nicht entladen werden soll, mindestens einer der entsprechenden Schalter und das entsprechende Hauptrelais geöffnet wird.

**Revendications**

1. Module de batterie (101) capable d'être couplé à un module de véhicule (102), le module de batterie (101) comprenant :

une source d'alimentation ; et un circuit de surveillance d'isolation couplé à la source d'alimentation, **caractérisé en ce que** le circuit de surveillance d'isolation est configuré pour être apte à décharger un module de condensateur Y du module de véhicule (102) lorsque le module de batterie (101) est couplé au module de véhicule (102).

2. Module de batterie (101) selon la revendication 1, dans lequel le circuit de surveillance d'isolation est configuré pour être connecté en parallèle au module de condensateur Y lorsque le module de batterie (101) est couplé au module de véhicule (102).

3. Module de batterie (101) selon la revendication 1 ou 2, dans lequel le circuit de surveillance d'isolation comprend une ou plusieurs unités de circuit dont chacune correspond à un condensateur Y du module de condensateur Y comprenant un ou plusieurs condensateurs Y.

4. Module de batterie (101) selon la revendication 3, dans lequel chacune des une ou plusieurs unités de circuit comprend un commutateur et une résistance connectés en série l'un à l'autre, où la résistance est suffisamment élevée pour décharger le condensateur Y en un temps requis.

5. Module de batterie (101) selon la revendication 4, dans lequel chacune des une ou plusieurs unités de circuit comprend en outre un relais principal connecté en série au commutateur et à la résistance, qui est configuré pour séparer la source d'alimentation par rapport au module de véhicule (102).

6. Module de batterie (101) selon l'une quelconque des revendications 3 à 5, dans lequel, si le module de condensateur Y comprend deux condensateurs Y, deux unités de circuit correspondant aux deux condensateurs Y sont agencées dans le circuit de surveillance d'isolation, où une première unité de circuit des deux unités de circuit comprend une première résistance et un premier commutateur connectés entre la borne positive de la source d'alimentation et un châssis, et une seconde unité de circuit des deux unités de circuit comprend une seconde résistance et un second commutateur connectés entre la borne négative de la source d'alimentation et le châssis, où la première unité de circuit et la seconde unité de circuit sont configurées pour être connectées en parallèle à un premier condensateur Y et un second condensateur Y du module de condensateur Y respectivement de façon à décharger le premier condensateur Y et le second condensateur Y respectivement.

7. Module de batterie (101) selon la revendication 6, dans lequel la première unité de circuit comprend en outre un premier relais principal (Main+) connecté en série à la première résistance et au premier commutateur, et la seconde unité de circuit comprend en outre un second relais principal (Main-) connecté en série à la seconde résistance et au second commutateur, dans lequel la source d'alimentation est connectée entre le premier relais principal (Main+) et le second relais principal (Main-).

8. Système (100) comprenant un module de batterie (101) capable d'être couplé à un module de véhicule (102) selon l'une quelconque des revendications 1 à 7, dans lequel le module de véhicule (102) comprend un module de condensateur Y comprenant un ou plusieurs condensateurs Y.

9. Système (100) selon la revendication 8, où le module de véhicule (102) comprend en outre une charge, et le module de condensateur Y et la charge sont connectés en parallèle entre des pôles à haute tension, HV, HV+ et HV-du module de véhicule (102).

10. Système (100) selon la revendication 8 ou 9, dans lequel le module condensateur Y comprend deux condensateurs Y qui sont agencés entre les pôles HV (HV+ et HV-) du module de véhicule (102), où un premier condensateur Y des deux condensateurs Y est agencé entre un premier pôle HV (HV+) et un châssis, et un second condensateur Y des deux condensateurs Y est agencé entre un second pôle HV (HV-) et le châssis.

11. Système (100) selon la revendication 10, où le module de véhicule (102) comprend en outre un condensateur X et une charge connectés entre les pôles HV (HV+ et HV-), et une unité de circuit de décharge pour décharger le condensateur X est connectée en parallèle au condensateur X, qui comprend un commutateur et une résistance connectés en série l'un à l'autre.

12. Système (100) selon la revendication 10 ou 11, où le châssis est soit du module de véhicule (102) soit du module de batterie (101), ou à la fois du module de véhicule (102) et du module de batterie (101) et sont connectés.

13. Procédé (500) pour décharger un condensateur Y d'un module de condensateur Y d'un module de véhicule (102) dans un système (100) selon l'une quelconque des revendications 7 à 12, comprenant les étapes consistant à :

recevoir (501) un signal de collision si une situation anormale survient dans le système (100) ; déterminer (502) si un contenu énergétique du condensateur Y dans le module de véhicule (102) est supérieur à un seuil prédéterminé en réponse au signal de collision ; et décharger le condensateur Y si le contenu énergétique du condensateur Y est supérieur au seuil prédéterminé, **caractérisé en ce que** l'étape de décharge comprend l'étape consistant à utiliser (503) le circuit de surveillance d'isolation dans le module de batterie (101) en tant que dispositif de décharge pour décharger le condensateur Y.

14. Procédé (500) selon la revendication 13, dans lequel le seuil est de 0,2 J, et l'étape d'utilisation (503) comprend en outre l'étape consistant à commander un relais entre le module de batterie (101) et le module de véhicule (102) pour connecter le circuit de surveillance d'isolation avec le condensateur Y, dans lequel, lorsque le condensateur Y doit être déchargé, à la fois le commutateur correspondant et le relais principal correspondant sont fermés, et lorsque le condensateur Y ne doit pas être déchargé, au moins l'un du commutateur correspondant et du relais principal correspondant est ouvert.

100

101

102

FIG. 1

FIG. 2

FIG. 3

Start

501 — Receiving a crash signal if an abnormal situation occurs in a system

502 — Determining whether an energy content of a Y-capacitor in the vehicle module (102) is greater than a predetermined threshold in response to the crash signal

No

Yes

503 — Using the isolation monitoring circuit in the battery module (101) as a discharge device to discharge the Y-capacitor if the energy content of the Y-capacitor is greater than the predetermined threshold

End

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013314097 A1